# EUROPÄISCHE PATENTANMELDUNG

(11) **EP 3 670 216 A1**
(43) Veröffentlichungstag der Anmeldung: **24.06.2020**
(21) Anmeldenummer: 18215516.8
(22) Anmeldetag: 21.12.2018
(51) Int. Cl.: B60D 1/48, B60D 1/62, B62D 47/00

(54) **PERSONENANHÄNGER FÜR EINEN ELEKTROBUS**

(71) Anmelder: Carrosserie Hess AG, 4512 Bellach (CH)
(72) Erfinder: Naef, Alex, 4512 Bellach (CH)
(74) Vertreter: Keller & Partner Patentanwälte AG

(57) **Zusammenfassung**

Ein Personenanhänger (100) für einen Elektrobus (1) umfasst eine Kupplung (161) zum Ankoppeln des Personenanhängers (100) an den Elektrobus (1), eine Batterie (120) zur Speicherung von Fahrenergie, einen Hochvolt-Anschluss (162) zur Übertragung von Fahrenergie zum Elektrobus (1), mindestens einen von der Batterie (120) speisbaren Antrieb (113, 114), mindestens eine gelenkte Achse (111, 112) und eine Steuerung (130), welche mit dem mindestens einen Antrieb (113, 114) und der mindestens einen gelenkten Achse (111, 112) steuerungsmässig verbunden ist, so dass der Personenanhänger (100) für den Fahrbetrieb automatisch steuerbar ist. Der Personenanhänger (100) ermöglicht einen flexibleren Einsatz als bekannte Modelle, weil der Elektrobus (1) und der Personenanhänger (100) gemeinsam als Buszug aber auch je einzeln genutzt werden können. Aufgrund dessen kann dem jeweiligen Liniennetz und der bereitzustellenden Kapazität optimal Rechnung getragen werden, insbesondere auch bei temporären Änderungen der Linienführung und/oder des Fahrzeugeinsatzes. Totzeiten der Fahrzeuge können minimiert werden.

## Beschreibung

### Technisches Gebiet

Die Erfindung betrifft einen Personenanhänger für einen Elektrobus, einen Buszug mit einem solchen Personenanhänger und ein Verfahren zum Betreiben eines Transportsystems mit mindestens einem Elektrobus und mindestens einem Personenanhänger.

### Stand der Technik

Im öffentlichen Nah- und vermehrt auch Fernverkehr nimmt die Verbreitung von Elektrobussen laufend zu. Sie ermöglichen gegenüber Bussen mit Verbrennungsmotor insbesondere einen Betrieb mit geringerer Lärmentwicklung und reduzierten Abgasemissionen.

Vorliegend wird unter dem Begriff "Elektrobus" ein Bus zur Personenbeförderung verstanden, welcher - zumindest teilweise - mittels Elektromotoren betreibbar ist, wobei die dazu eingesetzte elektrische Energie (Fahrenergie) von einer mit dem Bus mitgeführten Batterie und/oder über einen Stromabnehmer von einer Oberleitung bezogen wird. Bekannte Lösungen sind Oberleitungsbusse (Trolleybusse) mit oder ohne zusätzliche Speicherbatterie, reine Elektrobusse oder Hybridbusse, welche mindestens einen Verbrennungsmotor (z. B. Gas- oder Dieselmotor) aufweisen, der zum Aufladen der Speicherbatterie über einen Generator oder zum parallelen Antreiben der Antriebsachsen dient. Unter dem Begriff "Batterie" wird im Folgenden ein elektrischer Energiespeicher verstanden, er schliesst also nebst Baugruppen auf elektrochemischer Grundlage auch Kondensatoren, reversible Brennstoffzellen usw. ein.

Aufgrund der geringeren Energiedichte eines elektrischen Energiespeichers gegenüber einem Treibstofftank ist die Reichweite eines Elektrobusses mit voll aufgeladener Batterie in der Regel deutlich geringer als diejenige eines Busses mit Elektromotor. Im Linienbetrieb ist deshalb in der Regel mehrmals täglich ein Nachladen der Batterie erforderlich, wobei das Nachladen eine gewisse Zeit in Anspruch nimmt.

Es sind verschiedene Lösungen bekannt, mit welchen dieser Anforderung begegnet werden kann. Beispielsweise kann an Haltestellen oder Endhaltestellen eine Ladeinfrastruktur bereitgestellt werden, mittels welcher die Elektrobusse kurzzeitig oder während eines Endhalts aufladbar sind. Eine andere Lösung ist die schon lange bekannte (zumindest teilweise) Ausrüstung des Verkehrswegs mit einer Oberleitung, wobei in modernen Systemen Lücken oder längere Abschnitte ohne Oberleitung vorhanden sein können, die mit Hilfe einer mitgeführten Speicherbatterie ausreichender Kapazität überbrückt werden können.

Gerade im öffentlichen Nahverkehr verkehren Busse in der Regel auf vorgegebenen Verkehrswegen, wobei diese sowohl öffentliche Strassen als auch dedizierte Fahrwege umfassen können und wobei diese technisch unterschiedlich ausgerüstet sein können, z. B. mit oder ohne Oberleitung bzw. mit oder ohne vorhandene Ladestationen. Die Umstellung eines Betriebs mit Bussen mit Verbrennungsmotoren auf Elektrobusse erfordert oft eine aufwendige Nachrüstung der Infrastruktur. Soll der Verlauf des Verkehrswegs temporär (z. B. bei Bauarbeiten) oder dauerhaft geändert werden, sind umfangreiche Nachrüstungen bzw. der Rückgriff auf Busse mit Verbrennungsmotor notwendig. Da es mittel- und langfristig zur Reduktion des Unterhaltsaufwands einer Flotte in den meisten Fällen sinnvoll sein dürfte, ganz auf Busse mit Verbrennungsmotor zu verzichten, wird diese Rückgriffsmöglichkeit nicht mehr zur Verfügung stehen.

Ein anderer potenzieller Lösungsansatz wäre eine massive Erhöhung der Speicherkapazität der lokal mitgeführten Batterien. Da dies eine entsprechend massive Steigerung der zu bewegenden Masse mit sich bringt und sehr kostspielig ist, erscheint dieser Ansatz in der Regel als nicht zielführend.

Die Anpassung der Infrastruktur ist oft ebenfalls nicht sinnvoll oder gangbar, z. B. in folgenden Fällen:
- bei einer temporären Umstellung der Linienführung;
- wenn Oberleitungen - z. B. in historischen Stadtzentren - aus ästhetischen Gründen unerwünscht sind;
- wenn für eine (Schnell-)Ladestation am benötigten Ort keine Stromversorgung vorliegt.

Personenanhänger zur Verwendung mit Bussen zum Personentransport sind seit langer Zeit bekannt. Sie umfassen ein Passagierabteil mit mindestens 20 und bis zu 100 Plätzen oder mehr und dienen heute in der Regel der einfachen Erhöhung der Kapazität, z. B. in Stosszeiten, indem ein Bus (Omnibus oder Oberleitungsbus) mit einem Anhänger zu einem Buszug kombiniert wird. Gegenüber Gelenkbussen bietet dies den Vorteil der erhöhten Flexibilität, weil sich der Personenanhänger abkoppeln lässt, wenn die entsprechende Kapazität nicht benötigt wird. Gegenüber einem Einfachgelenkbus ist zudem bei der Verwendung eines entsprechenden Personenanhängers eine höhere Gesamtkapazität möglich, die an diejenige eines Doppelgelenkbusses heranreicht. Gelenkbusse bieten demgegenüber einen grösseren Komfort, weil der Fahrgastbereich durchgängig ausgebildet ist. Falls die Kapazität dauerhaft benötigt wird, ist der Gelenkbus zudem wirtschaftlicher. Gegenüber dem Einsatz zusätzlicher Busse ist sowohl der Einsatz eines Personenanhängers als auch derjenige eines Gelenkbusses wegen des geringeren Personalaufwands vorteilhaft.

Die Disposition und der konkrete Einsatz der Personenanhänger ist in einem flexiblen System relativ aufwendig, weil sie zur richtigen Zeit am richtigen Ort bereitgehalten werden müssen. Ihr Einsatzbereich ist zudem beschränkt, weil sie auf den Bus als Zugfahrzeug angewiesen sind, wobei der Bus in der Regel die benötigte Gesamt-Traktionsleistung und die entsprechende Fahrenergie zur Verfügung stellen muss.

### Darstellung der Erfindung

Aufgabe der Erfindung ist es, einen dem eingangs genannten technischen Gebiet zugehörenden Personenanhänger zu schaffen, welcher einen flexibleren Einsatz ermöglicht.

Die Lösung der Aufgabe ist durch die Merkmale des Anspruchs 1 definiert. Gemäss der Erfindung umfasst der Personenanhänger:
a) eine Kupplung zum Ankoppeln des Personenanhängers an den Elektrobus;
b) eine Batterie zur Speicherung von Fahrenergie;
c) einen Hochvolt-Anschluss zur Übertragung von Fahrenergie zwischen Personenanhänger und Elektrobus;
d) mindestens einen von der Batterie speisbaren Antrieb;
e) mindestens eine gelenkte Achse; und
f) eine Steuerung, welche mit dem mindestens einen Antrieb und der mindestens einen gelenkten Achse steuerungsmässig verbunden ist, so dass der Personenanhänger für den Fahrbetrieb automatisch steuerbar ist.

Mit Fahrbetrieb sind hier zum einen Fahrten auf einem Betriebshof (z. B. zu Wartungs- oder Reinigungsstationen) oder von einer Haltestelle zu einer beabstandet angeordneten Ladestation gemeint, zum anderen schliesst er den ordentlichen Betrieb zur Personenbeförderung zwischen Haltestellen des Liniennetzes ein. Bevorzugt kann der Personenanhänger also selbstständig und ohne Fahrzeugführer Personen transportieren. Dies muss - wie weiter unten im Detail ausgeführt - nicht auf dem gesamten Liniennetz möglich sein, sondern kann auf bestimmte Teilstrecken beschränkt sein, z. B. solche, welche gewisse Anforderungen an die Infrastruktur erfüllen (z. B. mit einem Leitsystem ausgerüstet sind) oder eine gewisse Komplexität nicht überschreiten. Ebenso kann es möglich sein, dass eine neu zu befahrende Strecke zunächst eingelernt werden muss, bevor das autonome Befahren möglich ist. Besonders bevorzugt ist aber die Steuerung derart ausgebildet, dass der Personenanhänger selbstständig und fahrzeugführerlos den Grossteil (oder alle) der möglichen Strecken eines (Nah-)Verkehrsnetzes befahren kann. So wird eine maximale Flexibilität erreicht.

Der Hochvolt-Anschluss ermöglicht die Übertragung elektrischer Energie zwischen dem Personenanhänger und dem Elektrobus, wobei die übertragbare Leistung bevorzugt mindestens 40 kW, besonders bevorzugt mindestens 100 kW beträgt. Die Spannung kann beispielsweise in einem Bereich zwischen 400 und 1200 V liegen. Bevorzugt kann diese Übertragung - je nach Bedarf - in beiden Richtungen stattfinden. Es gibt jedoch - wie weiter unten beschrieben - auch Anwendungsfälle bzw. Betriebskonzepte, welche nur die Übertragung in einer Richtung erfordern. Die übertragene Energie kann nebst der Fahrenergie auch Energie umfassen, welche für andere Zwecke, z. B. die Heizung, Lüftung oder Klimatisierung, die Bereitstellung von Ladestrom für mobile Endgeräte der Nutzer oder für die Bereitstellung eines lokalen Funknetzes (WLAN) benötigt wird.

Im Personenanhänger und/oder im Zugfahrzeug kann ein Umrichter angeordnet sein, so dass Energie auch bei unterschiedlichen Betriebsspannungen im Personenanhänger und im Zugfahrzeug übertragen werden kann.

Die steuerungsmässige Verbindung kann durch draht- bzw. fasergebundene und/oder drahtlose Kanäle zwischen der Steuerung und dem Antrieb sowie der gelenkten Achse geschaffen werden. Nebst diesen Komponenten werden weitere für den Fahrbetrieb notwendige Komponenten steuerungsmässig angebunden sein, z. B. Bremsen, die Beleuchtung und Fahrsicherheitssysteme (ABS, ESC etc.).

Mit Vorteil umfasst der Personenanhänger zwei Achsen, welche beide als gelenkte Achsen ausgebildet sind. In diesem Fall dient die Vorderachse im autonomen Betrieb des Personenanhängers als eigentliche Lenkachse, während die Hinterachse je nach Fahrsituation automatisch mit-oder gegenlenkt.

Neben der Kupplung zum mechanischen Ankoppeln des Personenanhängers an ein Zugfahrzeug, welche am vorderen Ende des Personenanhängers angeordnet ist, kann der Personenanhänger an seinem hinteren Ende eine Anhängerkupplung aufweisen, so dass der Personenanhänger selbst mit einem weiteren Personenanhänger als Buszug verkehren kann und/oder dass an einen Elektrobus als Zugfahrzeug mehrere Personenanhänger angehängt werden können.

Ein erfindungsgemässer Buszug umfasst einen Elektrobus zur Personenbeförderung und einen solchen erfindungsgemässen Personenanhänger. Die mindestens eine gelenkte Achse des Personenanhängers kann zum Mitlenken eingesetzt werden. Dies verbessert die Manövrierfähigkeit des Buszuges und trägt zu einer Reduktion der Abnutzung der Reifen und Fahrwerkskomponenten des Personenanhängers bei.

Grundsätzlich können auch mehrere Personenanhänger hintereinander an einen Elektrobus angekoppelt werden. In diesem Fall ist es besonders vorteilhaft, wenn die gelenkten Achsen der Personenanhänger zum Mitlenken eingesetzt werden, um so das geforderte Kurvenverhalten zu erreichen.

Mit Vorteil ist der Elektrobus durch einen Fahrzeugführer bedienbar. Dies ermöglicht einen flexiblen Einsatz auf allen Strecken, auf welchen ein Bus verkehren kann, ohne dass zusätzliche Infrastruktur benötigt wird.

Der Elektrobus kann zusätzlich auch automatisch steuerbar ausgebildet sein, so dass er führerlos verkehren kann. Auch ein Elektrobus, der ausschliesslich führerlos verkehrt, ist im Rahmen der Erfindung einsetzbar.

Bei einem erfindungsgemässen Verfahren zum Betreiben eines Transportsystems umfassend mindestens einen Elektrobus und mindestens einen erfindungsgemässen Personenanhänger verkehrt der Personenanhänger zeitweise auf zugeordneten Verkehrswegen im Personentransport automatisch (d. h. führerlos) und zeitweise an den mindestens einen Elektrobus angekoppelt.

Vorzugsweise sind mindestens zwei erfindungsgemässe Personenanhänger vorhanden. Dies ermöglicht eine erhöhte Flexibilität und insbesondere ein Abkoppeln eines Personenanhängers mit (teilweise) entleerter Batterie und ein anschliessendes Ankoppeln eines bereitstehenden anderen Personenanhängers mit voller Batterie, so dass die Versorgung mit elektrischer Energie für den Elektrobus innert kurzer Zeit wiederhergestellt werden kann.

Der erfindungsgemässe Personenanhänger ermöglicht einen viel flexibleren Einsatz als bekannte Modelle, insbesondere weil folgende Beförderungsmodi ermöglicht werden:
a) nur Elektrobus (elektrisch, führergesteuert oder führerlos, Fahrbatterie auf Zugfahrzeug und/oder über Oberleitung);
b) Buszug: Elektrobus und Personenanhänger (elektrisch, führergesteuert oder führerlos, Fahrbatterie auf Zugfahrzeug und Anhänger und/oder über Oberleitung);
c) nur Personenanhänger (elektrisch, führerlos, Fahrbatterie auf Anhänger);
d) a) und c) gleichzeitig, aber unabhängig voneinander.

Aufgrund dieser Beförderungsmodi kann dem Liniennetz (führerlos und nicht führerlos befahrbare Abschnitte) und der bereitzustellenden Kapazität (zeit- und netzabschnittabhängig) optimal Rechnung getragen werden, insbesondere auch bei temporären Änderungen der Linienführung und/oder des Fahrzeugeinsatzes. Totzeiten der Fahrzeuge können minimiert werden.

Im Fall b) kann der Elektrobus wie oben erwähnt durch die Lenkung, aber auch durch den Antrieb des Personenanhängers unterstützt werden. Somit muss der Elektrobus nicht derart ausgelegt werden, dass er die Leistung für den Anhängerbetrieb auf der gesamten Strecke selbst erbringen kann. Dies ermöglicht Einsparungen beim Elektrobus. Er kann zudem - was den Energieverbrauch betrifft - für den Beförderungsmodus a) optimiert werden.

Mit Vorteil ist die Steuerung derart ausgebildet, dass der Personenanhänger für ein Ankopplungsmanöver und ein Abkopplungsmanöver an den bzw. von dem Elektrobus automatisch steuerbar ist. Dies entlastet den Fahrzeugführer bzw. macht einen vollständig autonomen Betrieb von Elektrobus und Personenanhänger möglich, wenn auch der Elektrobus autonom führerlos betreibbar ist. Zudem lässt sich dadurch der Zeitbedarf für das An- und Abkopplungsmanöver reduzieren. Weil der Personenanhänger automatisch steuerbar ist, kann er selbstständig für das Ankoppeln in die bestgeeignete Ankopplungsposition fahren und sich nach dem Abkoppeln selbstständig aus der Abkopplungsposition entfernen und z. B. zu einer Ladestation, an einen Stellplatz oder zu einer anderen Ankopplungsposition fahren, falls er nicht unmittelbar in den Fahrbetrieb zum Personentransport übergeht.

Die Personen können während des kurzen Ab- oder Ankopplungsvorgangs im Personenanhänger verbleiben, was eine flexible Linien- und Fahrplangestaltung ermöglicht. Aufgrund der eigenen Batterie sind dabei sämtliche benötigten Systeme des Personenanhängers dauerhaft mit elektrischer Energie versorgt.

Mit Vorteil sind die Steuerung und der Hochvolt-Anschluss derart ausgebildet, dass beim Ankopplungsmanöver eine Hochvolt-Verbindung zwischen Personenanhänger und Elektrobus automatisch geschaffen wird und dass beim Abkopplungsmanöver die Hochvolt-Verbindung zwischen Personenanhänger und Elektrobus automatisch getrennt wird.

Falls der Elektrobus stets mit einem Fahrzeugführer versehen ist, kann letzterer alternativ oder wahlweise das An- oder Abkoppeln manuell vornehmen. In diesem Fall können auch die Hochvolt-Verbindungen manuell geschaffen bzw. getrennt werden.

Bevorzugt weist der Personenanhänger einen Ladeanschluss zum Aufladen der Batterie auf. Der Personenanhänger kann somit flexibel und unabhängig vom Zugfahrzeug geladen werden. Der Ladeanschluss kann in an sich bekannter Weise als Stecker, als Stromabnehmer oder als Kontaktflächenpaar ausgebildet sein. Es kann von Vorteil sein, wenn verschiedene Ladeanschlüsse vorhanden sind, so dass der Personenanhänger mit unterschiedlichen Ladestationen bzw. Ladestellen zusammenwirken kann.

Alternativ erfolgt das Laden stets über das Zugfahrzeug. Dies kann beispielsweise dann sinnvoll sein, wenn der Personenanhänger ausschliesslich in Kombination mit Oberleitungsbussen verwendet wird, wobei der Ladestrom über die Oberleitung bezogen wird.

Mit Vorteil umfasst der Personenanhänger Heiz-, Lüftungs-, Klima- und/oder Beleuchtungseinrichtungen, welche mindestens in einem vom Elektrobus abgekoppelten Zustand von der Batterie mit elektrischer Energie versorgbar sind. Dazu sind eine entsprechende Verkabelung zwischen der Batterie des Personenanhängers und den entsprechenden Einrichtungen und eine lokale Steuerung für die Einrichtungen und deren Stromversorgung auf dem Personenanhänger vorhanden. Dies ermöglicht eine vollständige Autonomie des Personenanhängers.

Bevorzugt ist die Steuerung des Personenanhängers oder eine Steuerung des Elektrobusses derart ausgebildet, dass eine Energieversorgung des Elektrobusses im Fahrbetrieb im zusammengekoppelten Zustand prioritär von der Batterie des Personenanhängers erfolgt.

Der mindestens eine Personenanhänger kann also in einem vorteilhaften Betriebskonzept als wechselbarer Energiespeicher für den mindestens einen Elektrobus eingesetzt werden, wobei im zusammengekoppelten Zustand die Steuerung des Personenanhängers und eine Steuerung des Elektrobusses derart zusammenwirken, dass eine Energieversorgung des Elektrobusses prioritär von der Batterie des Personenanhängers erfolgt.

Dies bedeutet, dass im üblichen Fahrbetrieb mit angekoppeltem Personenanhänger der Elektrobus in der Regel von letzterem versorgt wird. Unterschreitet der Ladestand der Batterie des Personenanhängers eine gewisse Untergrenze, kann sich der Elektrobus auch in dieser Betriebsart selbst versorgen, um zu gewährleisten, dass der Personenanhänger eine benötigte Strecke nach dem Abkoppeln, z. B. zu einer Ladestation, noch autonom zurücklegen kann.

Die prioritäre Versorgung von der Batterie des Personenanhängers ermöglicht eine Minimierung der Ladezeiten beim Elektrobus. Die Flexibilität des Einsatzes des Elektrobusses wird somit maximiert.

Bei einem weiteren Betriebskonzept verkehrt der mindestens eine Elektrobus (insbesondere mit Fahrenergie aus einer lokalen, auf dem Elektrobus befindlichen Speicherbatterie) auf einem zugeordneten Hauptverkehrsweg im Pendel- oder Ringbetrieb, der mindestens eine Personenanhänger legt einen Abschnitt des Hauptverkehrswegs angekoppelt an den Elektrobus und einen Nebenverkehrsweg automatisch (führerlos) zurück, wobei eine kombinierte erste Fahrzeit für den Abschnitt des Hauptverkehrswegs und den Nebenverkehrsweg tiefer ist als eine zweite Fahrzeit für den gesamten Hauptverkehrsweg. Eine erste Ladezeit pro Zyklus ist dabei für den Personenanhänger grösser als eine zweite Ladezeit pro Zyklus für den Elektrobus. Die Ladezeiten sind dabei mit Vorteil so gewählt, dass der Ladestand nach Abschluss des Zyklus dem Ladestand zu Beginn entspricht, so dass der Zyklus beliebig oft in der vorgegebenen Zeit durchlaufen werden kann. Die zweite Ladezeit kann dabei auch Null sein, wenn die Speicherbatterie des Elektrobusses wie weiter unten beschrieben vollständig über die Versorgung vom Personenanhänger aufgeladen werden kann.

In einem entsprechend anderen Betriebskonzept ist der mindestens eine Elektrobus als Oberleitungsbus ausgebildet, der auf einem zugeordneten ersten Verkehrsweg mit Oberleitungsversorgung verkehrt, und der mindestens eine Personenanhänger verkehrt teilweise auf dem ersten Verkehrsweg und teilweise auf einem zweiten Verkehrsweg ohne Oberleitungsversorgung.

Der erste Verkehrsweg muss nicht zu 100% mit einer mit elektrischer Energie beaufschlagten Oberleitung versehen sein, dieser kann auch in diesem Bereich gewisse Lücken aufweisen, die durch eine lokale Stromversorgung an Bord des Elektrobusses überbrückt werden, z. B. bei Kreuzungen oder in Bereichen, wo eine Oberleitung ästhetisch nachteilig ist. Der erste Verkehrsweg ist aber beispielsweise zu mindestens 75%, insbesondere zu mindestens 90%, mit einer Oberleitung versehen.

Wenn es sich beim Elektrobus um einen Oberleitungsbus handelt, ist es in der Regel vorteilhaft, wenn auf Streckenabschnitten mit aktiver Oberleitung die Energieversorgung des Elektrobusses und gegebenenfalls auch des Personenanhängers von der Oberleitung erfolgt. Im Oberleitungsbetrieb können mit Vorteil zusätzlich auch noch eine allfällig vorhandene Speicherbatterie des Oberleitungsbusses und die Batterie des Personenanhängers aufgeladen werden.

Bei einer bevorzugten Ausführungsform ist im Fahrbetrieb neben der Energieversorgung des Elektrobusses auch eine Speicherbatterie des Elektrobusses parallel mit elektrischer Energie aus der Batterie des Personenanhängers aufladbar. Dies ermöglicht ein Wiederaufladen der Speicherbatterie des Elektrobusses während der Fahrt, so dass die Ladezeiten des Busses minimiert oder ganz eingespart werden können. Um die maximale Übertragungsleistung von der Batterie des Personenanhängers zum Elektrobus zu begrenzen, kann das Laden der Speicherbatterie des Elektrobusses auf Streckenabschnitte begrenzt werden, in welchen nur eine begrenzte Antriebsleistung benötigt wird (z. B. ebene oder abfällige Abschnitte, Abschnitt mit Langsamfahrt oder Abschnitte, in welchen der Buszug gebremst wird).

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines Buszuges mit einem Elektrobus und einem erfindungsgemässen Personenanhänger;
- Fig. 2: eine grafische Darstellung eines ersten Betriebskonzepts mit einem Buszug mit einem erfindungsgemässen Personenanhänger;
- Fig. 3: eine grafische Darstellung eines zweiten Betriebskonzepts;
- Fig. 4: eine grafische Darstellung eines dritten Betriebskonzepts;
- Fig. 5: eine grafische Darstellung eines vierten Betriebskonzepts;
- Fig. 6: eine grafische Darstellung eines fünften Betriebskonzepts;
- Fig. 7: eine schematische Darstellung des Energieflusses in einem ersten Betriebszustand;
- Fig. 8: eine schematische Darstellung des Energieflusses in einem zweiten Betriebszustand; und
- Fig. 9: eine schematische Darstellung des Energieflusses in einem dritten Betriebszustand.

Grundsätzlich sind in den Figuren gleiche Teile mit gleichen Bezugszeichen versehen.

### Wege zur Ausführung der Erfindung

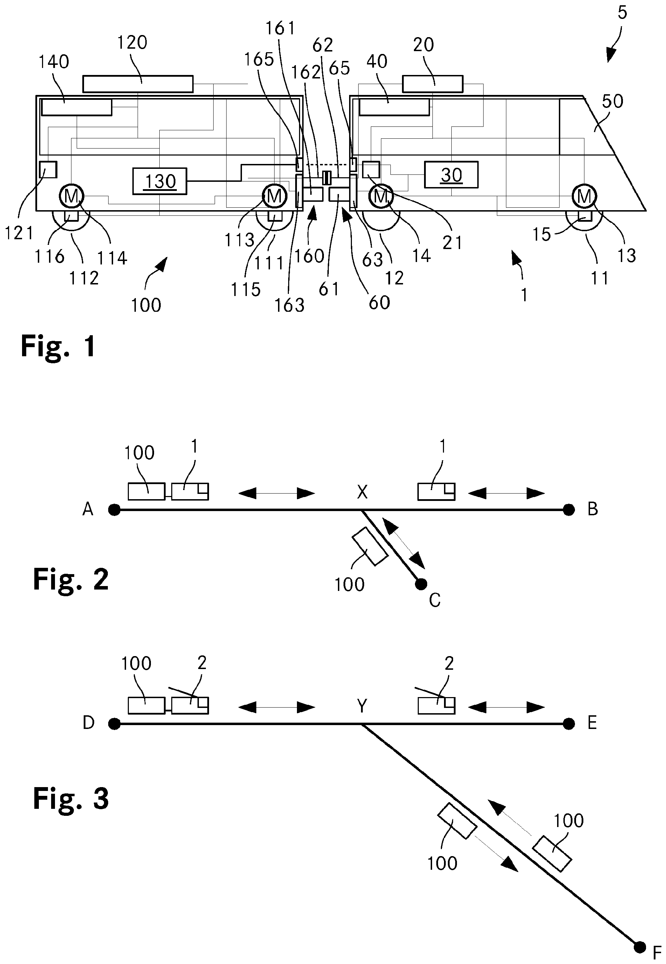

Die Figur 1 ist eine schematische Darstellung eines Buszuges 5 mit einem Elektrobus 1 und einem erfindungsgemässen Personenanhänger 100. Der Elektrobus 1 weist zwei Achsen 11, 12 auf, welche beide mittels elektrischen Antrieben 13, 14 angetrieben sind. Die vordere Achse 11 ist mittels einer Lenkeinrichtung 15 lenkbar ausgebildet, die hintere Achse 12 ist nicht lenkbar. Die elektrischen Antriebe 13, 14 werden von einer Speicherbatterie 20 versorgt, die hier beispielhaft auf dem Dach des Elektrobusses 1 angeordnet ist.

Die Speicherbatterie 20 kann u. a. mit Hilfe eines Ladeanschlusses 21 aufgeladen werden. Dieser ist so ausgebildet, dass er mit Ladestationen zusammenwirken kann, mit Vorteil automatisch. Der Elektrobus 1 weist eine Steuerung 30 auf, welche u. a. das Laden und Entladen der Speicherbatterie 20, die weiter unten beschriebenen Mittel zum Ankoppeln eines Anhängers und ein Heizungs-, Lüftungs- und Klimasystem (HLK-System) 40 steuert.

Der Elektrobus 1 umfasst einen Führerstand 50 für einen Fahrzeugführer. Letzterer führt in an sich bekannter Weise das Fahrzeug, steuert und betätigt somit mit gängigen Bedienungselementen (Lenkrad, Pedale, Hebel usw.) den Antrieb, die Bremsen und die Lenkung.

Der Elektrobus 1 umfasst weiter eine Anhängerkupplung 61 und einen Hochvolt-Verbinder 62. Beide sind an einer automatischen Kupplungsanordnung 60 ausgebildet, die nebst mechanischen Kupplungsmitteln für die mechanische Ankopplung eines Anhängers und die Hochvolt-Verbindung eine entsprechende Steuerung 63 umfasst. Der Elektrobus 1 umfasst zudem eine Schnittstelle 65 zum Aufbau einer drahtlosen Signalverbindung.

Der Hochvolt-Verbinder 62 ist über eine Leitung mit der Speicherbatterie 20 verbunden. Signal- bzw. Steuerleitungen verlaufen zwischen der automatischen Kupplungsanordnung 60 und der Schnittstelle 65 einerseits und der Steuerung 30 des Elektrobusses 1 andererseits.

Der Personenanhänger 100 umfasst ebenfalls zwei Achsen 111, 112, welche beide mittels elektrischen Antrieben 113, 114 angetrieben sind. Beide Achsen 111, 112 sind zudem mittels einer entsprechenden Lenkeinrichtung 115, 116 lenkbar ausgebildet. Die elektrischen Antriebe 113, 114 werden von einer Speicherbatterie 120 versorgt, die hier beispielhaft auf dem Dach des Personenanhängers 100 angeordnet ist.

Die Speicherbatterie 120 kann u. a. mit Hilfe eines Ladeanschlusses 121 aufgeladen werden. Dieser ist so ausgebildet, dass er mit Ladestationen zusammenwirken kann, mit Vorteil automatisch. Der Personenanhänger 100 weist eine Steuerung 130 auf, welche u. a. das Laden und Entladen der Speicherbatterie 120, die weiter unten beschriebenen Mittel zum Ankoppeln eines Anhängers und ein Heizungs-, Lüftungs- und Klimasystem (HLK-System) 140 steuert.

Die Steuerung 130 ist in der Lage, auf der Basis von Zielinformationen, Karteninformationen und Sensordaten (nicht dargestellter) fahrzeuggebundener Sensoren führerlos auf entsprechenden Verkehrswegen zu verkehren. Dazu ist sie steuerungsmässig mit den Antrieben 113, 114 und den Lenkeinrichtungen 115, 116 (sowie mit weiteren, nicht dargestellten, Komponenten, z. B. Bremsen) verbunden. Entsprechende Systeme sind bekannt, insbesondere für Personenwagen. Allfällig erhöhten Sicherheitsanforderungen in Bezug auf den öffentlichen Personenverkehr kann Rechnung getragen werden, indem zusätzliche Sicherheitssysteme vorgesehen werden, die maximale Geschwindigkeit begrenzt wird und/oder die Nutzung auf bestimmte Verkehrswege beschränkt wird. Dies ist bei Transportmitteln, die im Linienverkehr eingesetzt sind, deutlich einfacher umsetzbar als bei Verkehrsmitteln für den Individualverkehr.

Der Personenanhänger 100 umfasst weiter eine automatische Kupplungsanordnung 160 mit einer Kupplung 161 zum Ankoppeln an ein Zugfahrzeug und einem Hochvolt-Verbinder 162. Gesteuert durch die entsprechende Steuerung 163 der Kupplungsanordnung 160 und im Zusammenwirken mit der Kupplungsanordnung 60 des Elektrobusses 1 (bzw. eines anderen geeigneten Zugfahrzeugs) lässt sich sowohl die mechanische Verbindung als auch die Hochvolt-Stromverbindung zwischen dem Elektrobus 1 und dem Personenanhänger 100 automatisch herstellen. Entsprechende automatische Kupplungsanordnungen zur mechanischen und elektrischen Kopplung eines Anhängers an ein Zugfahrzeug sind an sich bekannt, vgl. z. B. DE 10 2012 016 234 A1 (e-drives UG).

Die Datenverbindung zwischen den beiden Fahrzeugen erfolgt drahtlos über eine Schnittstelle 165 des Personenanhängers 100 und die Schnittstelle 65 des Elektrobusses.

Der Hochvolt-Verbinder 162 des Personenanhängers 100 ist über eine Leitung mit der Speicherbatterie 120 des Personenanhängers 100 verbunden. Signal- bzw. Steuerleitungen verlaufen zwischen der automatischen Kupplungsanordnung 160 und der Schnittstelle 165 einerseits und der Steuerung 130 des Personenanhängers 100 andererseits.

Nicht in der schematischen Figur 1 dargestellt sind insbesondere diverse Sensoren, die für den führerlosen Verkehr des Personenanhängers 100 und das automatische An- und Abkoppeln des Personenanhängers 100 an bzw. vom Elektrobus 1 benötigt werden. Diese Sensoren sind allesamt an die entsprechende Steuerung 130 des Personenanhängers 100 bzw. die entsprechende Steuerung 30 des Elektrobusses 1 angeschlossen. Sensordaten oder aus Sensordaten gewonnene abgeleitete Daten können über die drahtlose Signalverbindung zwischen dem Personenanhänger 100 und dem Elektrobus übertragen werden, insbesondere für den An- bzw. Abkopplungsvorgang.

Die Figur 2 ist eine grafische Darstellung eines ersten Betriebskonzepts mit einem Buszug mit einem erfindungsgemässen Personenanhänger. Sie stellt eine Hauptstrecke AB, welche sich von einer Endhaltestelle A zu einer Endhaltestelle B erstreckt, grafisch dar. Die Hauptstrecke AB wird von einem Elektrobus 1 im Pendelbetrieb befahren. Von einer Abzweigung X auf der Hauptstrecke AB zweigt eine Nebenstrecke XC zu einer Endhaltestelle C ab. Das typische Passagieraufkommen auf der Hauptstrecke AB nimmt üblicherweise ausgehend von der Endhaltestelle A in Richtung der Endhaltestelle B ab, wie dies oft der Fall ist, wenn eine Linie von einem Siedlungszentrum (nahe A) im Wesentlichen radial nach aussen zur Peripherie (nahe B) verläuft.

Statt nun das Verkehrsmittel im äusseren Bereich XB halb leer verkehren zu lassen, wird bei der Abzweigung X der Personenanhänger 100 automatisch abgekoppelt. Er fährt dann autonom (führerlos) zur Endhaltestelle C und versorgt dabei Haltestellen auf der Nebenstrecke XC. An der Endhaltestelle C wird die Batterie des Personenanhängers 100 aufgeladen, anschliessend fährt der Personenanhänger 100 wieder zurück zur Abzweigung X, um dort wieder an den (von der Endhaltestelle B zurückkehrenden) Elektrobus 1 automatisch angekoppelt zu werden. Die Strecke XC zur Endhaltestelle A wird dann wieder als Buszug mit Elektrobus 1 und Personenanhänger 100 zurückgelegt.

Die Strecke XB von der Abzweigung X bis zur Endhaltestelle B des Elektrobusses 1 ist länger als die Strecke XC von der Abzweigung X bis zur Endhaltestelle C des Personenanhängers 100. Für das Aufladen des Personenanhängers 100 steht somit mehr Zeit zur Verfügung. Im entsprechenden Betriebskonzept ist es somit sinnvoll, im Fahrbetrieb als Buszug die Fahrenergie primär der Batterie des Personenanhängers 100 zu entnehmen. Nur für den solitären Betrieb des Elektrobusses 1 auf der Strecke XB bzw. BX wird die Speicherbatterie des Elektrobusses 1 (oder ein alternativer Antrieb bei einem Hybridbus) benötigt.

Ein idealisierter Fahrplan für einen vollständigen Zyklus auf den Linien der Figur 2 ist in der folgenden Tabelle dargestellt (EB: Elektrobus, PA: Personenanhänger). Es ist zu bemerken, dass bei einer konkreten Umsetzung natürlich Zusatzzeiten als Puffer vorgesehen würden bzw. die tatsächlichen Fahrzeiten kürzer wären als angegeben.

| **Zeit [min]** | **A** | **X** | **B** | **C** | **Vorgang** |
|---|---|---|---|---|---|
| 0 | EB+PA | | | | |
| 20 | | EB+PA | | | Abkoppeln EB/PA bei X |
| 25 | | | | PA | Ladevorgang PA bei C starten |
| 35 | | | EB | PA | Ladevorgang EB bei B starten |
| 40 | | | EB | PA | Ladevorgang EB bei B beendet |
| 50 | | | | PA | Ladevorgang PA bei C beendet |
| 55 | | EB+PA | | | Ankoppeln EB/PA bei X |
| 75 | EB+PA | | | | |

Für das Laden des Personenanhängers stehen somit beim dargestellten Beispiel maximal 25 Minuten zur Verfügung, für das Laden des Elektrobusses nur 5 Minuten. Ein beispielhafter Energiebedarf und die entsprechende Energiebereitstellung für den Fahrantrieb gehen aus der folgenden Tabelle hervor, wobei willkürliche Einheiten für die Energie verwendet werden:

| **Strecke** | **Bedarf EB** | **Bedarf PA** | **Bezug EB** | **Bezug PA** |
|---|---|---|---|---|
| AX | 30 | 0 | 0 | 30 |
| XB | 15 | - | 15 | - |
| XC | | 5 | - | 5 |
| BX | 15 | - | 15 | - |
| CX | | 5 | - | 5 |
| XA | 30 | 0 | 0 | 30 |
| **gesamt** | **90** | **10** | **30** | **70** |

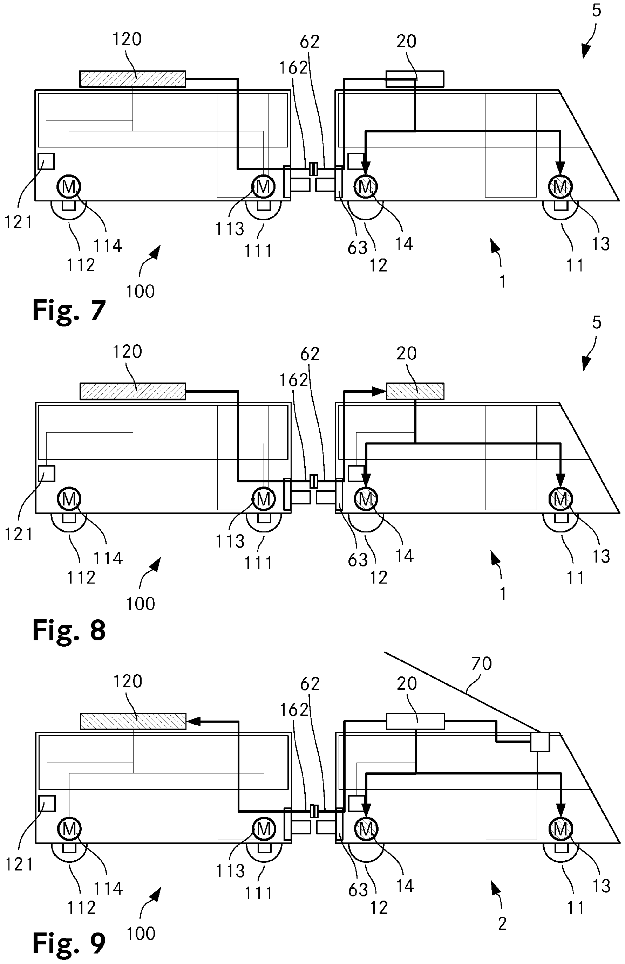

Auf den Strecken AX und XA liegt ein Energiefluss gemäss der schematischen Darstellung in der Figur 7 vor. Die beiden Antriebe 13, 14 für die Achsen 11, 12 des Elektrobusses 1 werden mit elektrischer Energie aus der Batterie 120 des Personenanhängers 100 gespeist.

Die für den Elektrobus benötigte Energie kann - eine genügend hohe Ladeleistung vorausgesetzt - bei der Endhaltestelle B direkt von der Speicherbatterie des Elektrobusses 1 aufgenommen werden. Alternativ wird auf den Strecken AX bzw. XA die Speicherbatterie mit elektrischer Energie von der Batterie des Personenanhängers 100 ergänzend aufgeladen (Betriebszustand gemäss Figur 8).

Das Betriebskonzept gemäss Figur 2 ist insbesondere dann von Vorteil, wenn ein Passagieraufkommen wie oben skizziert vorliegt und wenn eine zu bedienende Nebenstrecke vorhanden ist, die führerlos befahrbar ist.

Die Figur 3 ist eine grafische Darstellung eines zweiten Betriebskonzepts. Sie stellt eine Hauptstrecke DE, welche sich von einer Endhaltestelle D zu einer Endhaltestelle E erstreckt, grafisch dar. Die Hauptstrecke DE wird von einem Oberleitungsbus 2 im Pendelbetrieb befahren, wobei der Oberleitungsbus 2 eine lokale Speicherbatterie zur Speicherung von Fahrenergie aufweist. Von einer Abzweigung Y auf der Hauptstrecke DE zweigt eine Nebenstrecke YF zu einer Endhaltestelle F ab. Das typische Passagieraufkommen auf der Hauptstrecke DE nimmt üblicherweise ausgehend von der Endhaltestelle D in Richtung der Endhaltestelle E ab, wie dies oft der Fall ist, wenn eine Linie von einem Siedlungszentrum (nahe D) im Wesentlichen radial nach aussen zur Peripherie (nahe E) verläuft.

Der innere Abschnitt DY der Hauptstrecke DE ist mit einer Oberleitung ausgestattet, der äussere Abschnitt YE nicht. Weil im äusseren Abschnitt YE ein geringerer Kapazitätsbedarf besteht, wird bei der Abzweigung Y der Personenanhänger 100 automatisch abgekoppelt. Er fährt dann autonom (führerlos) zur Endhaltestelle F und von dort wieder zurück zur Abzweigung Y und bedient dabei Haltestellen der Nebenstrecke YF, FY. Dort wird er wieder mit einem Elektrobus 1 automatisch gekoppelt um mit diesem zusammen als Buszug zur Endhaltestelle D zu verkehren.

Die Strecke YF von der Abzweigung Y bis zur Endhaltestelle F des Personenanhängers 100 ist länger als die Strecke YE von der Abzweigung Y bis zur Endhaltestelle E des Oberleitungsbusses 2. Im vorliegenden Betriebskonzept verkehren deshalb in einem Zyklus zwei Personenanhänger auf den Abschnitten YF, FY.

Die Fahrenergie soll ausschliesslich der Oberleitung auf der Strecke DY bzw. YD entnommen werden, so dass keine zusätzlichen Ladestationen und auch keine Ladezeiten im Stillstand benötigt werden. Auf den Streckenabschnitten YE, YF bzw. EY, FY werden die Antriebe des Oberleitungsbusses 2 bzw. des Personenanhängers 100 vom jeweiligen lokalen Stromspeicher versorgt.

Ein idealisierter Fahrplan für einen vollständigen Zyklus auf den Linien der Figur 3 ist in der folgenden Tabelle dargestellt (EB: Elektrobus, PA: Personenanhänger). Es ist zu bemerken, dass bei einer konkreten Umsetzung natürlich Zusatzzeiten als Puffer vorgesehen würden bzw. die tatsächlichen Fahrzeiten kürzer wären als angegeben.

| **Zeit [min]** | **D** | **Y** | **E** | **F** | **Vorgang** |
|---|---|---|---|---|---|
| 0 | EB+PA1 | | | | |
| 20 | | EB+PA1 | | | Abkoppeln EB/PA1 bei Y, Abdrahten EB |
| 25 | | | | PA2 | |
| 35 | | | EB | | |
| 45 | | | | PA1 | |
| 50 | | EB+PA2 | | | Koppeln EB/PA2 bei Y, Andrahten EB |
| 70 | EB+PA2 | | | | |

Der Personenanhänger PA1 kann bei Y für den nächstfolgenden Elektrobus bereitgestellt werden.

Ein beispielhafter Energiebedarf und die entsprechende Energiebereitstellung für den Fahrantrieb gehen aus der folgenden Tabelle hervor, wobei die Personenanhänger auf dem Streckenabschnitt YF bzw. FY zusammengefasst und willkürliche Einheiten für die Energie verwendet werden:

| **Strecke** | **Bedarf EB** | **Bedarf PA** | **Bezug EB** | **Bezug PA** | **Bezug Oberleitung** |
|---|---|---|---|---|---|
| DY | 40 | 0 | | | 75 (40+10+25) |
| YE | 10 | - | 10 | | - |
| YF | - | 25 | | 25 | - |
| EY | 10 | - | 10 | | - |
| FY | - | 25 | | 25 | - |
| YD | 40 | 0 | | | 75 (40+10+25) |
| **gesamt** | **100** | **50** | **20** | **50** | **150** |

Auf den Strecken DY bzw. YD ergibt sich der in der Figur 9 schematisch dargestellte Energiefluss. Über den Stromabnehmer 70 des Oberleitungsbusses 2 wird Energie aufgenommen und sowohl den Antrieben 13, 14 für die Achsen 11, 12 des Oberleitungsbusses 2 als auch der Batterie 120 des Personenanhängers 100 zugeführt.

Das Betriebskonzept gemäss Figur 3 ist insbesondere dann von Vorteil, wenn ein Passagieraufkommen wie oben erwähnt vorliegt, äussere Bereiche der Strecken nicht mit einer Oberleitung versehen sind und eine zu bedienende Nebenstrecke vorhanden ist, die führerlos befahrbar ist.

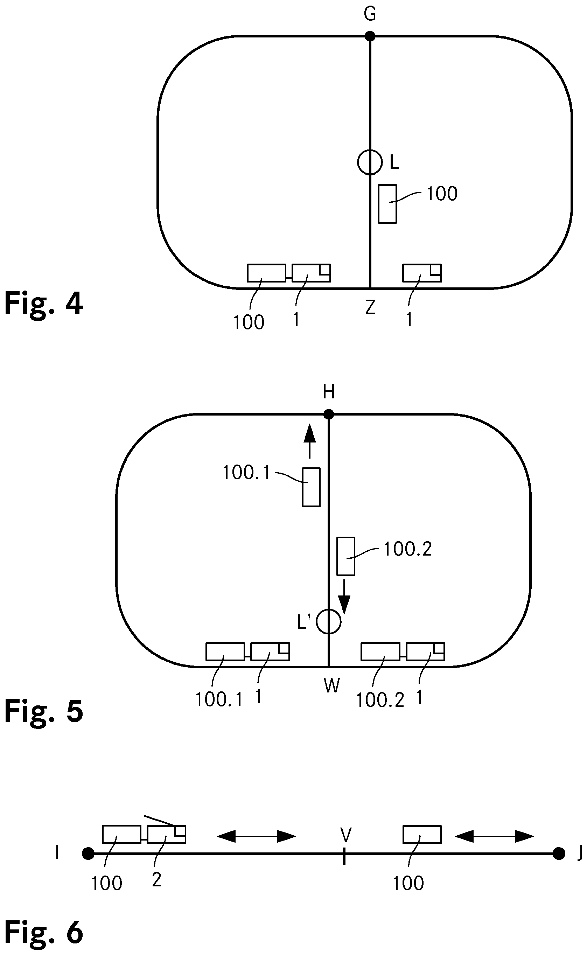

Die Figur 4 ist eine grafische Darstellung eines dritten Betriebskonzepts. Sie stellt eine ringförmige Hauptstrecke GG grafisch dar. Diese Hauptstrecke GG wird von einem Elektrobus 1 im Ringbetrieb befahren. Weitere Elektrobusse zirkulieren in Gegenrichtung. Von einer Abzweigung Z auf der Hauptstrecke GG zweigt eine radiale Nebenstrecke ZG zu der Ringhaltestelle G ab. Für die Nebenstrecke ZG ergibt sich entsprechend ein kürzerer Weg als für den Abschnitt von Z nach G auf der Hauptstrecke GG.

Im dargestellten Beispiel verkehrt auf einem ersten Ringteil GZ der Elektrobus 1 mit einem Passagieranhänger 100 als Buszug. Bei der Abzweigung Z wird der Personenanhänger 100 automatisch abgekoppelt. Er fährt dann autonom (führerlos) zu einer Ladestation L und nach dem Laden weiter zur Ringhaltestelle G. Dort wird der Personenanhänger 100 wieder an den Elektrobus 1 automatisch angekoppelt. Daran schliesst sich ein nächster Zyklus an.

Da die radiale Nebenstrecke ZG kürzer ist als der zweite Ringteil von Z nach G, steht für das Aufladen des Personenanhängers 100 mehr Zeit zur Verfügung als für ein mögliches Aufladen des Elektrobusses 1. Im entsprechenden Betriebskonzept ist es somit sinnvoll, im Fahrbetrieb als Buszug die Fahrenergie primär der Batterie des Personenanhängers 100 zu entnehmen. Nur für den solitären Betrieb des Elektrobusses 1 auf dem zweiten Ringteil von Z nach G wird die Speicherbatterie des Elektrobusses 1 (oder ein alternativer Antrieb bei einem Hybridbus) benötigt.

Ein idealisierter Fahrplan für einen vollständigen Zyklus auf den Linien der Figur 4 ist in der folgenden Tabelle dargestellt (EB: Elektrobus, PA: Personenanhänger). Es ist zu bemerken, dass bei einer konkreten Umsetzung natürlich Zusatzzeiten als Puffer vorgesehen würden bzw. die tatsächlichen Fahrzeiten kürzer wären als angegeben.

| **Zeit [min]** | **G** | **Z** | **L** | **Vorgang** |
|---|---|---|---|---|
| 0 | EB+PA | | | |
| 40 | | EB+PA | | Abkoppeln EB/PA bei Z |
| 50 | | | PA | Ladevorgang PA bei L starten |
| 70 | | | PA | Ladevorgang PA bei L beendet |
| 80 | EB+PA | | | Ankoppeln EB/PA bei G |

Für das Laden des Personenanhängers stehen somit beim dargestellten Beispiel 20 Minuten zur Verfügung. Ein beispielhafter Energiebedarf und die entsprechende Energiebereitstellung für den Fahrantrieb gehen aus der folgenden Tabelle hervor, wobei willkürliche Einheiten für die Energie verwendet werden:

| **Strecke** | **Bedarf EB** | **Bedarf PA** | **Bezug EB** | **Bezug PA** |
|---|---|---|---|---|
| GZ | 60 | 0 | 0 | 100 (60+40) |
| ZL | - | 10 | | 10 |
| ZG | 40 | - | 40 | - |
| LG | - | 10 | | 10 |
| **gesamt** | **100** | **20** | **40** | **120** |

Die für den Elektrobus auf dem zweiten Ringteil benötigte Energie wird während der Fahrt als Buszug auf dem ersten Ringteil GZ vom Personenanhänger 100 zum Elektrobus 1 übertragen und dort in der Speicherbatterie gespeichert. Es ergibt sich der in der Figur 8 schematisch dargestellte Energiefluss, wonach die Batterie 120 des Personenanhängers 100 sowohl diejenige Energie liefert, welche für den Betrieb der Antriebe 13, 14 für die Achsen 11, 12 des Elektrobusses 1 benötigt wird, als auch diejenige Energie, welche in der Speicherbatterie 20 des Elektrobusses für die Fahrt auf dem zweiten Ringteil gespeichert wird.

Die Figur 5 ist eine grafische Darstellung eines vierten Betriebskonzepts. Sie stellt eine ringförmige Hauptstrecke HH grafisch dar. Diese Hauptstrecke HH wird von einem Elektrobus 1 im Ringbetrieb befahren. Weitere Elektrobusse zirkulieren in Gegenrichtung. Von einer Abzweigung W auf der Hauptstrecke HH zweigt eine radiale Nebenstrecke WH zu der Ringhaltestelle H ab. Für die Nebenstrecke WH ergibt sich entsprechend ein kürzerer Weg als für den Abschnitt von W nach H auf der Hauptstrecke HH.

Im dargestellten Beispiel verkehrt auf beiden Ringteilen HW und WH der Hauptstrecke HH der Elektrobus 1 mit jeweils einem Passagieranhänger 100 als Buszug. Bei der Abzweigung W wird der erste Personenanhänger 100.1 automatisch abgekoppelt und ein zweiter Personenanhänger 100.2 automatisch angekoppelt. Der abgekoppelte Personenanhänger 100.1 fährt dann autonom (führerlos) zu einer Ladestation L' und nach dem Laden weiter zur Ringhaltestelle H. Dort wird der Personenanhänger 100.1 nach dem Abkoppeln des anderen Personenanhängers 100.2 wieder an den Elektrobus 1 automatisch angekoppelt. Daran schliesst sich ein nächster Zyklus an.

Da die radiale Nebenstrecke WH kürzer ist als der zweite Ringteil von W nach H, steht für das Aufladen der Personenanhänger 100.1, 100.2 mehr Zeit zur Verfügung als für ein mögliches Aufladen des Elektrobusses 1. Im entsprechenden Betriebskonzept ist es somit sinnvoll, im Fahrbetrieb als Buszug die Fahrenergie primär den Batterien des Personenanhängers 100.1, 100.2 zu entnehmen. Die Speicherbatterie des Elektrobusses 1 wird für den normalen Fahrbetrieb nicht benötigt. Sie dient primär als Reserve und für unvorhergesehene Situationen.

Ein idealisierter Fahrplan für einen vollständigen Zyklus auf den Linien der Figur 5 ist in der folgenden Tabelle dargestellt (EB: Elektrobus, PA1, PA2: Personenanhänger). Es ist zu bemerken, dass bei einer konkreten Umsetzung natürlich Zusatzzeiten als Puffer vorgesehen würden bzw. die tatsächlichen Fahrzeiten kürzer wären als angegeben.

| **Zeit [min]** | **H** | **W** | **L'** | **Vorgang** |
|---|---|---|---|---|
| 0 | EB+PA1 | | | |
| 15 | | | PA2 | Ladevorgang PA2 bei L' starten |
| 30 | | | PA2 | Ladevorgang PA2 bei L' beendet |
| 40 | | EB+PA1 | | Abkoppeln EB/PA1 bei W |
| 40 | | EB+PA2 | | Ankoppeln EB/PA2 bei W |
| 45 | | | PA1 | Ladevorgang PA1 bei L' starten |
| 60 | | | PA1 | Ladevorgang PA1 bei L' beendet |
| 60 | | | PA1/PA2 | Ladevorgang PA2 bei L' starten |
| 75 | | | PA2 | Ladevorgang PA2 bei L' beendet |
| 80 | EB+PA2 | | | Abkoppeln EB/PA2 bei H |
| 80 | EB+PA1 | | | Ankoppeln EB/PA1 bei H |

Für das Laden der Personenanhänger stehen somit beim dargestellten Beispiel je 15 Minuten zur Verfügung, wenn bei L' nur eine Ladestation vorhanden ist. Sind zwei Ladestationen vorhanden, ergibt sich eine maximale Ladezeit von 20 Minuten. Ein beispielhafter Energiebedarf und die entsprechende Energiebereitstellung für den Fahrantrieb gehen aus der folgenden Tabelle hervor, wobei willkürliche Einheiten für die Energie verwendet werden:

| **Strecke** | **Bedarf EB** | **Bedarf PA1** | **Bedarf PA2** | **Bezug EB** | **Bezug PA1** | **Bezug PA2** |
|---|---|---|---|---|---|---|
| HW | 60 | 0 | - | 0 | 60 | - |
| WL' | - | 5 | - | | 5 | - |
| WH | 60 | - | 0 | 0 | - | 60 |
| L'H | - | 15 | - | - | 15 | - |
| HL' | - | - | 15 | - | - | 15 |
| L'W | - | - | 5 | - | - | 5 |
| **gesamt** | **120** | **20** | **20** | **0** | **80** | **80** |

Auf den Strecken HW und WH liegt ein Energiefluss gemäss der schematischen Darstellung in der Figur 7 vor. Die beiden Antriebe 13, 14 für die Achsen 11, 12 des Elektrobusses 1 werden mit elektrischer Energie aus der Batterie 120 des Personenanhängers 100 gespeist.

Die Figur 6 ist eine grafische Darstellung eines fünften Betriebskonzepts. Sie stellt eine Hauptstrecke IJ, welche sich von einer Endhaltestelle I zu einer Endhaltestelle J erstreckt, grafisch dar. Eine Zwischenstation V unterteilt die Hauptstrecke IJ in einen ersten Abschnitt IV und einen zweiten Abschnitt VJ. Der erste Abschnitt IV der Hauptstrecke IJ ist mit einer Oberleitung ausgestattet, der zweite Abschnitt VJ nicht. Der erste Abschnitt IV wird von einem Buszug mit einem Oberleitungsbus 2 und einem Personenanhänger 100 im Pendelbetrieb befahren. Bei der Zwischenstation V wird der Personenanhänger 100 abgekoppelt. Er befährt dann alleine und autonom (führerlos) zur Endhaltestelle J und von dieser wieder zurück zur Zwischenstation V. Dort wird der Personenanhänger mit einem folgenden Elektrobus gekoppelt, um wieder als Buszug zur anderen Endhaltestelle I zu verkehren.

Die Fahrenergie soll ausschliesslich der Oberleitung auf der Strecke IV bzw. VI entnommen werden. Auf dem Streckenabschnitt VJ bzw. JV werden die Antriebe des Personenanhängers 100 vom lokalen Stromspeicher versorgt.

Ein idealisierter Fahrplan für einen vollständigen Zyklus auf den Linien der Figur 6 ist in der folgenden Tabelle dargestellt (EB: Elektrobus, PA: Personenanhänger). Es ist zu bemerken, dass bei einer konkreten Umsetzung natürlich Zusatzzeiten als Puffer vorgesehen würden bzw. die tatsächlichen Fahrzeiten kürzer wären als angegeben.

| **Zeit [min]** | **I** | **V** | **J** | **Vorgang** |
|---|---|---|---|---|
| 0 | EB1+PA1 | | | |
| 10 | | EB3+PA3 | PA4 | |
| 20 | EB2+PA2 | | | |
| 30 | | EB1+PA1/PA4 | PA5 | PA1 abkoppeln, PA4 ankoppeln |
| 40 | EB3+PA3 | | | |
| 50 | | EB2+PA2/PA5 | PA1 | PA2 abkoppeln, PA5 ankoppeln |
| 60 | EB1+PA4 | | | |
| 70 | | EB3+PA3/PA1 | PA2 | PA3 abkoppeln, PA1 ankoppeln |
| 80 | EB2+PA5 | | | |
| 90 | | EB1+PA4/PA2 | PA3 | PA4 abkoppeln, PA2 ankoppeln |
| 100 | EB3+PA1 | | | |
| 110 | | EB2+PA5/PA3 | PA4 | PA5 abkoppeln, PA3 ankoppeln |
| 120 | EB1+PA2 | | | |
| 130 | | EB3+PA1/PA4 | PA5 | PA1 abkoppeln, PA4 ankoppeln |
| 140 | EB2+PA3 | | | |
| 150 | | EB1+PA2/PA5 | PA1 | PA2 abkoppeln, PA5 ankoppeln |
| 160 | EB3+PA4 | | | |
| 170 | | EB2+PA3/PA1 | PA2 | PA3 abkoppeln, PA1 ankoppeln |
| 180 | EB1+PA5 | | | |
| 190 | | EB3+PA4/PA2 | PA3 | PA4 abkoppeln, PA2 ankoppeln |
| 200 | EB2+PA1 | | | |
| 210 | | EB1+PA5/PA3 | PA4 | PA5 abkoppeln, PA3 ankoppeln |
| 220 | EB3+PA2 | | | |
| 230 | | EB2+PA1/PA4 | PA5 | PA1 abkoppeln, PA4 ankoppeln |
| 240 | EB1+PA3 | | | |
| 250 | | EB3+PA2/PA5 | PA1 | PA2 abkoppeln, PA5 ankoppeln |
| 260 | EB2+PA4 | | | |
| 270 | | EB1+PA3/PA1 | PA2 | PA3 abkoppeln, PA1 ankoppeln |
| 280 | EB3+PA5 | | | |
| 290 | | EB2+PA4/PA2 | PA3 | PA4 abkoppeln, PA2 ankoppeln |
| 300 | EB1+PA1 | | | |

Ein beispielhafter Energiebedarf und die entsprechende Energiebereitstellung für den Fahrantrieb gehen aus der folgenden Tabelle hervor, wobei alle benötigte Fahrenergie auf dem ersten Abschnitt IV aus der Oberleitung bezogen wird. Es werden willkürliche Einheiten für die Energie verwendet:

| **Strecke** | **Bedarf EB** | **Bedarf PA** | **Bezug EB** | **Bezug PA** | **Bezug Oberleitung** |
|---|---|---|---|---|---|
| IV | 45 | 0 | 0 | 0 | 65 (45+20) |
| VJ | - | 20 | - | 20 | - |
| JV | - | 20 | - | 20 | - |
| VI | 45 | 0 | 0 | 0 | 65 (45+20) |
| **gesamt** | **90** | **40** | **0** | **40** | **130** |

Die Erfindung ist nicht auf die dargestellten Ausführungsbeispiele beschränkt. Zum einen können der Personenanhänger und der Elektro- bzw. Oberleitungsbus weitere Funktionalitäten aufweisen, oder nicht-erfindungswesentliche Funktionalitäten können fehlen. Zum anderen sind mit dem erfindungsgemässen Personenanhänger und entsprechenden Buszügen auch weitere Betriebskonzepte und Betriebsmodi umsetzbar.

Zusammenfassend ist festzustellen, dass die Erfindung einen Personenanhänger schafft, welcher einen flexibleren Einsatz ermöglicht als vorbekannte Personenanhänger.

## Patentansprüche

1. Personenanhänger für einen Elektrobus, umfassend
a) eine Kupplung zum Ankoppeln des Personenanhängers an den Elektrobus;
b) eine Batterie zur Speicherung von Fahrenergie;
c) einen Hochvolt-Anschluss zur Übertragung von Fahrenergie zwischen Personenanhänger und Elektrobus;
d) mindestens einen von der Batterie speisbaren Antrieb; und
e) mindestens eine gelenkte Achse, und
f) eine Steuerung, welche mit dem mindestens einen Antrieb und der mindestens einen gelenkten Achse steuerungsmässig verbunden ist, so dass der Personenanhänger für den Fahrbetrieb automatisch steuerbar ist.

2. Personenanhänger nach Anspruch 1, **dadurch gekennzeichnet, dass** die Steuerung derart ausgebildet ist, dass der Personenanhänger für ein Ankopplungsmanöver und ein Abkopplungsmanöver an den bzw. von dem Elektrobus automatisch steuerbar ist.

3. Personenanhänger nach Anspruch 2, **dadurch gekennzeichnet, dass** die Steuerung und der Hochvolt-Anschluss derart ausgebildet sind, dass beim Ankopplungsmanöver eine Hochvolt-Verbindung zwischen Personenanhänger und Elektrobus automatisch geschaffen wird und dass beim Abkopplungsmanöver die Hochvolt-Verbindung zwischen Personenanhänger und Elektrobus automatisch getrennt wird.

4. Personenanhänger nach einem der Ansprüche 1 bis 3, **gekennzeichnet durch** einen Ladeanschluss zum Aufladen der Batterie.

5. Personenanhänger nach einem der Ansprüche 1 bis 4, umfassend Heiz-, Lüftungs-, Klima- und/oder Beleuchtungseinrichtungen, wobei diese mindestens in einem vom Elektrobus abgekoppelten Zustand von der Batterie mit elektrischer Energie versorgbar sind.

6. Buszug umfassend einen Elektrobus zur Personenbeförderung und einen Personenanhänger nach einem der Ansprüche 1 bis 5.

7. Buszug nach Anspruch 6, **dadurch gekennzeichnet, dass** der Elektrobus durch einen Fahrzeugführer bedienbar ist.

8. Buszug nach Anspruch 6 oder 7, **dadurch gekennzeichnet, dass** die Steuerung des Personenanhängers oder eine Steuerung des Elektrobusses derart ausgebildet ist, dass eine Energieversorgung des Elektrobusses im Fahrbetrieb im zusammengekoppelten Zustand prioritär von der Batterie des Personenanhängers erfolgt.

9. Buszug nach Anspruch 8, **dadurch gekennzeichnet, dass** im Fahrbetrieb neben der Energieversorgung des Elektrobusses auch eine Speicherbatterie des Elektrobusses parallel mit elektrischer Energie aus der Batterie des Personenanhängers aufladbar ist.

10. Verfahren zum Betreiben eines Transportsystems umfassend mindestens einen Elektrobus und mindestens einen Personenanhänger nach einem der Ansprüche 1 bis 5, **dadurch gekennzeichnet, dass** der Personenanhänger zeitweise auf zugeordneten Verkehrswegen im Personentransport automatisch und zeitweise an den mindestens einen Elektrobus angekoppelt verkehrt.

11. Verfahren nach Anspruch 10, **dadurch gekennzeichnet, dass** der mindestens eine Personenanhänger als wechselbarer Energiespeicher für den mindestens einen Elektrobus eingesetzt wird, wobei im zusammengekoppelten Zustand die Steuerung des Personenanhängers und eine Steuerung des Elektrobusses derart zusammenwirken, dass eine Energieversorgung des Elektrobusses prioritär von der Batterie des Personenanhängers erfolgt.

12. Verfahren nach Anspruch 10 oder 11, **dadurch gekennzeichnet, dass** der mindestens eine Elektrobus als Oberleitungsbus ausgebildet ist und auf einem zugeordneten ersten Verkehrsweg mit Oberleitungsversorgung verkehrt und dass der mindestens eine Personenanhänger teilweise auf dem ersten Verkehrsweg und teilweise auf einem zweiten Verkehrsweg ohne Oberleitungsversorgung verkehrt.

13. Verfahren nach einem der Ansprüche 10 bis 12, **dadurch gekennzeichnet, dass** der mindestens eine Elektrobus auf einem zugeordneten Hauptverkehrsweg im Pendel- oder Ringbetrieb verkehrt, dass der mindestens eine Personenanhänger einen Abschnitt des Hauptverkehrswegs angekoppelt an den Elektrobus zurücklegt und einen Nebenverkehrsweg automatisch zurücklegt, wobei eine kombinierte erste Fahrzeit für den Abschnitt des Hauptverkehrswegs und den Nebenverkehrsweg tiefer ist als eine zweite Fahrzeit für den gesamten Hauptverkehrsweg, und dass eine erste Ladezeit pro Zyklus für den Personenanhänger grösser ist als eine zweite Ladezeit pro Zyklus für den Elektrobus.
